# EUROPÄISCHE PATENTSCHRIFT

(11) **EP 2 157 147 B1**
(45) Veröffentlichungstag und Bekanntmachung des Hinweises auf die Patenterteilung: **04.03.2015**
(21) Anmeldenummer: 09167435.8
(22) Anmeldetag: 07.08.2009
(51) Int. Cl.: D03D 3/00, D03D 1/00, C09J 7/04

(54) **Hoch abriebfestes Band insbesondere für die Bandagierung von Kabelbäumen in Automobilen**
Extremely friction-resistant belt, particularly for bandaging cable trees in automobiles
Bande hautement résistante à l'usure, notamment pour le bandage de faisceaux de câbles dans des automobiles

(30) Priorität: 21.08.2008 DE 102008038597; 19.11.2008 DE 102008058226
(43) Veröffentlichungstag der Anmeldung: 24.02.2010
(73) Patentinhaber: TESA SE, 20253 Hamburg (DE)
(72) Erfinder: Wahlers-Schmidlin, Andreas, 21720, Guderhandviertel (DE); Kopf, Patrick Dr., 56567 Neuwied (DE); Pfaff, Ronald Dr., 22335, Hamburg (DE)

(56) Entgegenhaltungen:
- EP-A2- 1 258 347
- WO-A1-02/18509
- WO-A1-2006/108871
- DE-U1-202006 015 701
- JP-A- 2003 041 487
- RO-B1- 120 183
- US-A- 4 936 135

## Beschreibung

Die Erfindung betrifft ein hoch abriebfestes Band, vorzugsweise zum Umhüllen von langgestrecktem Gut wie insbesondere Leitungen oder Kabelsätze, aus einem Träger, auf den zumindest auf einer Seite eine druckempfindliche Klebebeschichtung aufgebracht ist. Des Weiteren betrifft die Erfindung die Verwendung des Bands sowie einen Kabelbaum, der mit dem erfindungsgemäßen Band ummantelt ist.
In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.
Die Abriebbeständigkeit ist ein Maß für die Scheuerfestigkeit von Klebebändern.
Als Methode, die Abriebbeständigkeit von Schutzsystemen in der Fahrzeugelektrik zu bestimmen, hat sich die internationale Norm ISO 6722, Kapitel 9.3 "Scrape abrasion test" (Ausgabe April 2002), etabliert. In Anlehnung an die Norm ISO 6722 wird die Scheuerbeständigkeit von Klebebändern gemäß LV 312 geprüft. Der Prüfling mit einer Länge von ca. 10 cm wird auf einen 5 oder 10 mm dicken Stahldorn einlagig in Längsrichtung aufgeklebt. Als Abriebwerkzeug dient ein Stahldraht mit 0,45 mm Durchmesser, der unter einer Gewichtsbelastung von 7 N mittig über den Prüfling reibt. Als Maßzahl für die Abriebeigenschaften wird die Anzahl der Doppelhübe bestimmt, bis der Prüfling zerstört ist. Bei sehr hohen Abriebfestigkeiten hat es sich bewährt, das Klebeband auch auf einem Metalldorn mit 5 mm Durchmesser zu messen. Dadurch kann auch eine Abriebfestigkeit gegenüber schärferen Gegenständen wie zum Beispiel einer Metallkante simuliert werden.

Das Ergebnis der Prüfung wird die Abriebklasse des Prüflings unter Nennung Dorndurchmessers und der Gewichtsbelastung genannt. Eine Klassifizierung der Klebebänder erfolgt in den Klassen A bis F gemäß Tabelle.

**Tabelle : Einteilung der Abriebklassen nach LV312 (Februar 2008)**

| **Abriebklasse** | **Anforderung** |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | 5000 -14999 Hübe |
| F extrem hoher Abriebschutz | ≥ 15000 Hübe |

Die Geräuschdämpfungswirkung ist ein Maß für die geräuschmindernde Wirkung von Klebebändern.
Die physikalische Messung der Geräuschdämpfungswirkung erfolgt gemäß der Methode, wie sie in DE 100 39 982 A1 detailliert beschrieben wird. Es handelt sich hierbei um eine in der Automobilindustrie etablierte Messmethodik, wie sie beispielsweise auch in der BMW-Norm GS 95008-3 (Ausgabe Mai 2000) angegeben wird.

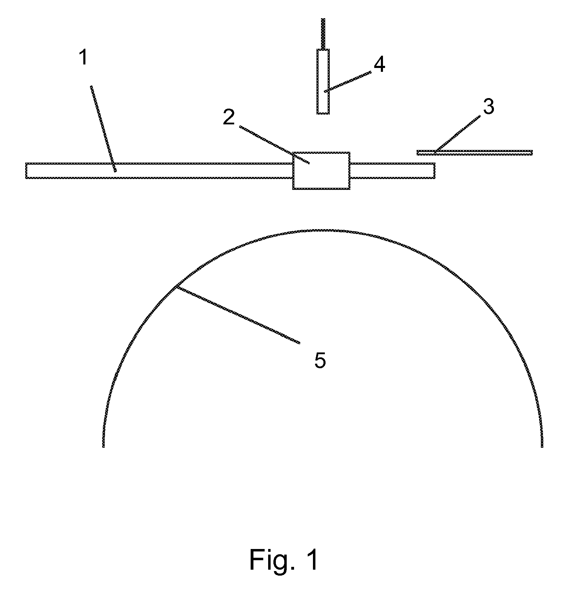

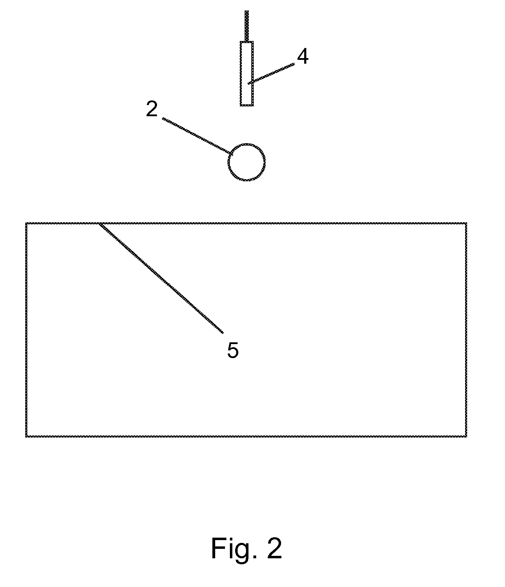

Im Folgenden wird in Verbindung mit den Figuren 1 und 2 das Messverfahren nach der BMW-Norm GS 95008-3 aus Mai 2000 ausführlich dargelegt.

Es zeigen
- Figur 1: den Aufbau der Messvorrichtung in der seitlichen Ansicht und
- Figur 2: denselben Aufbau in der horizontalen Ansicht.

Bei dieser Meßmethode wird ein definierter Stahlstab (1) mit 8 mm Durchmesser derartig mit dem Prüfling (2) - sprich Klebeband - umwickelt, dass sich Hebellängen von 220 mm und 150 mm ergeben. Der umwickelte Stahlstab (1) wird bis zur Arretierung (3) auf die Fallhöhe und mit einem Gewicht von ca. 16 g auf ein Aluminiumblech (5) fallengelassen. Das Aluminiumblech (5), das im unverformten Zustand 350 x 190 x 0,3 [mm] misst, wird halbtonnenförmig unter dem Prüfling (2) angeordnet, so dass sich eine Weite von 290 mm ergibt.
Das Gesamtschallergebnis wird mittels eines über der Prüfanordnung befindlichen Mikrofons (4) in einem Frequenzbereich von beispielsweise 20 bis 12.500 Hz mit einem handelsüblichen Schallmessgerät, beispielsweise Typ 2226 der Firma Bruel & Kjaer erfasst und aufgezeichnet. Für das menschliche Ohr als besonders relevant sind Frequenzen im Bereich von 2.000 bis 5.000 Hz.
Die Dämpfung wird als Differenz zwischen Nullwert mit nicht-umwickeltem Stahlstab sowie dem jeweiligen Messwert in dB(A) angegeben.

Die Klebebänder werden gemäß der Automobilprüfungsrichtlinie LV 312 (Ausgabe Februar 2008) auch in Geräuschdämpfungsklassen (Klasse A gleich geringe Geräuschdämpfung bis Klasse E gleich höchste Geräuschdämpfung, die Messung erfolgt in dB (A)) eingeteilt.

Die folgende Tabelle bietet eine Übersicht über die beschriebene Klasseneinteilung:

| Klasse | Einstufung | Anforderung dB(A) Dämpfung |
|---|---|---|
| A | kein/gering | 0 bis <2 |
| B | gering | >2 bis <5 |
| C | mittel | >5 bis <10 |
| D | hoch | >10 bis <15 |
| E | sehr hoch | >15 |

Zum Schutz von Fahrzeugleitungen gegen mechanische Einflüsse und Reibung an scharfkantigen Karosseriebauteilen werden heutzutage auch Geflechtschläuche aus den Werkstoffen Polyamid, Polyester und Polyethylen eingesetzt. Den guten Schutz gegen Abrieb erreichen solche Produkte durch den Einsatz von monofilen Garnen. Ein Nachteil solcher Garne ist die besonders hohe Steifigkeit aufgrund des vergleichsweise großen Durchmessers jedes einzelnen Filaments.
Damit ausreichend flexible Produkte für den Einsatz im Fahrzeugbau hergestellt werden können, muss daher eine offene Geflechtkonstruktion gewählt werden, die eine Verschiebbarkeit der Garne ermöglicht.
Diese Art von Geweben kann wegen des offenen Geflechts nicht für eine Beschichtung mit Klebmasse eingesetzt werden, um Klebebänder herzustellen, weil im Beschichtungsprozess die Klebmasse durch die Löcher fließen würde.

Für flexible Gewebe, die üblicherweise das Trägermaterial für Tapes darstellen, werden Multifilamentgarne eingesetzt. Die gute Flexibilität der Gewebe wird durch den Einsatz von Garnen mit vielen Einzelfilamenten erreicht.
Durch den Einsatz von vielen Einzelfilamenten kann aber kein hoher Abrieb hergestellt werden

Aus der DE 20 2006 015 701 U ist ein Kabelwickelband bekannt, insbesondere für den Motorenraum eines Automobils, mit einem bandförmigen, aus Gewebe bestehenden Träger, der mindestens auf einer Seite mit einer selbstklebenden Klebeschicht versehen ist, die aus einem Haftklebstoff besteht.
Das Gewebe des Trägers besteht aus einem Garn, welches aus einem Polyamidwerkstoff gebildet ist und welches eine Garnstärke von mindestens 280 dtex aufweist, wobei das Garn aus 24 bis 80 Filamenten gebildet ist und wobei das Kabelwickelband sowohl an einem Dorn mit 5 mm Durchmesser, als auch an einem Dorn mit 10 mm Durchmesser die Abriebklasse E gemäss LV 312 erfüllt.

Aufgabe der Erfindung ist es, gegenüber dem Stand der Technik eine merkliche Verbesserung zu erzielen und ein Band bereitzustellen, welches die Möglichkeit zur Bandagierung von Einzelleitungen zu Kabelsätzen mit hohem Schutz gegen mechanische Schädigungen durch Scheuern und Reiben an scharfen Kanten, Graten, oder Schweißpunkten aufweist.
Gelöst wird diese Aufgabe durch ein Band, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Bands sowie ein mit dem Band ummantelter Kabelbaum vom Erfindungsgedanken umfasst.
Demgemäß betrifft die Erfindung ein hoch abriebfestes Band, vorzugsweise zum Umhüllen von langgestrecktem Gut wie insbesondere Leitungen oder Kabelsätze, mit einem Gewebe als Träger auf den zumindest einseitig eine Klebebeschichtung aufgebracht ist, wobei das Gewebe aus Polyamid besteht, die zur Bildung des Gewebes verwendeten Garne eine Stärke von 280 bis 1100 dtex aufweisen und jedes Garn aus mindestens 90 Einzelfilamenten aufgebaut ist.
Aufgrund der hervorragenden Ausgestaltung des Bandes erreicht das Kabelwickelband die Abriebklasse **E** gemäß LV312 an einen 5-mm-Dorn und einem 10-mm-Dorn und darüber hinaus sogar die Abriebklasse **F** gemäß LV312 an einem 5-mm-Dorn und einem 10-mm-Dorn, eine Tatsache, die derartig vom Fachmann nicht zu erwarten gewesen ist.
Gemäß einer vorteilhaften Ausführungsform der Erfindung sind die verwendeten Garne aus 90 bis 288 Einzelfilamenten, vorzugsweise 100 bis 150 Einzelfilamenten, besonders vorzugsweise 130 bis 145 Einzelfilamenten aufgebaut.
Weiter vorzugsweise liegt die Anzahl der Kettfäden im Gewebeträger im Bereich 12 bis 45 je cm, vorzugsweise 15 bis 25 je cm und/oder die Anzahl der Schussfäden im Gewebeträger im Bereich 10 bis 35 je cm, vorzugsweise 15 bis 25 je cm.
Gemäß einer weiteren vorteilhaften Ausführungsform der Erfindung weist der Gewebeträger ein Flächengewicht von 130 bis 300 g/m², vorzugsweise 180 bis 220 g/m² auf.
Schließlich finden als Polymere für den Kunststoff des Gewebes PA6, PA46, PA66, PA66 hitzestabilisiert, PA46 oder Hochtemperaturpolyamid Verwendung, vorzugsweise Polyamid, besonders bevorzugt Polyamid 66.
Gemäß der Erfindung ist zumindest einseitig auf dem Träger eine Klebebeschichtung aufgebracht.
Das Auftragsgewicht der Klebemasse auf dem Träger bewegt sich vorteilhafterweise im Bereich zwischen 20 bis 150 g/m².
Weiter vorzugsweise ist die Klebebeschichtung eine selbstklebende Klebebeschichtung besonders auf Basis von Kautschuk, Acrylat oder Silikon.
Um aus dem Träger ein Selbstklebeband herzustellen, kann aber auf alle bekannten Klebemassensysteme zurückgegriffen werden. Neben Natur- oder Synthesekautschuk basierten Klebemassen sind Silikonklebemassen sowie Polyacrylatklebemassen verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.
Als Beschichtungstechnologie kommen bekannte Systeme zum Zuge, wobei sich Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.
Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.
Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben. Die Klebemasse auf Acrylathotmelt-Basis kann UV-vernetzt werden. Andere Vernetzungsarten sind aber auch möglich, zum Beispiel die Elektronenstrahlenvernetzung.
In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal®, insbesondere acResin 258UV, von der BASF geführt wird. Diese Klebemasse mit niedrigem K-Wert erhält ihre anwendungsgerechten Eigenschaften durch eine abschließende strahlenchemisch ausgelöste Vernetzung.

Die Klebemasse kann in Längsrichtung des Klebebands in Form eines Streifens aufgebracht sein, der eine geringere Breite aufweist als der Träger des Klebebands.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.

Auf der Klebebeschichtung des Trägers kann zumindest ein Streifen einer Abdeckung vorgesehen sein, der oder die sich in Längsrichtung des Klebebands erstrecken und der oder die zwischen 20 % und 80 % der Klebebeschichtung abdecken.

Gemäß einer bevorzugten Ausführungsform der Erfindung ist genau ein Streifen der Abdeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.
Wird das Klebeband zur Ummantelung eines Kabelbaums eingesetzt, indem das Klebeband in einer spiralförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.
Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.

Für das sichere und wirtschaftliche Aufbringen des Klebebands in besagter spiralförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Abdeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.
Besonders vorzugsweise verbleiben ein oder zwei Klebestreifen, deren Gesamtbreite 20 bis 50 % der Breite des Trägers ausmacht.

Insbesondere wenn die Klebebeschichtung nicht vollflächig erfolgt, sondern beispielsweise streifenförmig, beziehen sich die angegebenen Prozentzahlen auf die Breite der Streifen der Eindeckung in Bezug auf die Breite des Trägers, sprich erfindungsgemäß weisen der oder die Streifen der Eindeckung eine Breite auf, die zwischen 20 und 80 % der Breite des Trägers ausmacht.

Als Materialien für die Abdeckung kommen die insbesondere für Kabelbandagierungsanwendungen üblichen Folien basierend auf Polyolefinen (zum Beispiel Polyethylen-, Polypropylen-, mono- oder biaxial orientierte Polypropylenfolien, Polyester-, PA-, und andere Folien) oder PVC in Betracht, bevorzugt solche mit Weichmachergehalten zwischen 20 und 60 phr.

Des Weiteren können der Träger und/oder die Klebebeschichtung beispielsweise mit Hilfe eines aus Ammoniumpolyphosphat, Magnesiumhydroxid und/oder Aluminiumhydroxid bestehenden Flammschutzmittels oder mit Hilfe eines Chlorparaffins, gegebenenfalls in Kombination mit Antimontrioxid, flammhemmend ausgerüstet sein. Die Flammschutzmittel können auch bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Um die Darreichung des Klebebands zu optimieren, erstrecken sich in einer bevorzugten Ausführungsform der Erfindung Schwächungslinien über die gesamte Breite des Klebebands.
Um ein besonders einfaches Arbeiten für den Anwender zu ermöglichen, sind die Schwächungslinien rechtwinklig zur Laufrichtung des Klebebands ausgerichtet und/oder in regelmäßigen Abständen angeordnet. Das Klebeband ist somit in Querrichtung von Hand einreißbar
Eine weitere Verbesserung bei der Anwendung des Klebebands lässt sich erzielen, wenn das Klebeband in bevorzugt regelmäßigen Abständen komplett durchtrennt ist und als so genannte "kiss-cut Stanzlinge" auf Trennpapier aufgebracht ist. Auf diese Weise können durch Verwendung eines Dispensers die einzelnen Stanzlinge gezielt verspendet werden.
Bevorzugt sind die Schwächungslinien in Form von Perforationen ausgestaltet.
Es lassen sich auf diese Weise Kanten zwischen den einzelnen Abschnitten erzielen, die sehr fusselfrei sind, also ein unerwünschtes Ausfransen vermieden wird.
Besonders vorteilhaft lassen sich die Schwächungslinien diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.
Weitere Möglichkeiten stellen gesteuert intermittierend arbeitende Schneidtechnologien dar wie beispielsweise die Verwendung von Lasern, Ultraschall, Hochdruckwasserstrahlen. Wird wie beim Laser- oder Ultraschallschneiden ein Teil der Energie als Wärme in das Material eingebracht, lassen sich im Schneidbereich das Material verschmelzen, so dass ein störendes Ausfasern weitestgehend vermieden wird und man randscharfe Schneidkanten erhält. Letztere Verfahren eignen sich auch, um spezielle Schneidkantengeometrien zu erzielen, beispielsweise konkav oder konvex ausgeformte Schneidkanten.

Die Höhe der Stachel beziehungsweise Messer auf den Stanzwalzen beträgt bevorzugt 150 % der Dicke des Klebebands.
Das Loch-Steg-Verhältnis bei der Perforierung, also wie viel Millimeter hält das Material zusammen ("Brücke"), wie viel Millimeter sind durchgetrennt, bestimmt, wie leicht das Klebeband einzureißen ist. Des Weiteren beeinflusst dies Verhältnis letztlich auch, wie fusselfrei die Abrisskante zu erhalten ist.
Vorzugsweise beträgt die Stegbreite ungefähr 0,2 mm und die Schnittbreite zwischen den Stegen ungefähr 5 mm, das heißt, es wechseln sich 0,2 mm breite Stege mit 5 mm Einschnitten ab. Das Loch-Steg-Verhältnis beträgt demgemäß vorzugsweise 1:25.
Mit dieser Schwächung des Materials lässt sich eine ausreichend geringe Abreißkraft erzielen.
Gemäß einer vorteilhaften Ausführungsform, und um als Bandagierungsband Verwendung zu finden, beträgt die Höchstzugkraft des Bandes mehr als 500 N/cm und/oder die Reißdehnung zwischen 35 % und 65 %.
Die Messung dieser Werte erfolgt nach der DIN EN ISO 13934-1.
Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.
Überraschenderweise zeigt sich, dass sich mit dem erfindungsgemäßen Band aufgrund des Gewebeträgers eine hohe Abriebfestigkeit bei gleichzeitiger Flexibilität zeigt. Die hohe Anzahl von Einzelfilamenten in den Garnen in Verbindung mit dem erfindungsgemäß eingesetzten Polyamidgewebe ergibt ein besonders anschmiegsames und an der Oberfläche glattes Gewebe. Dabei kann das Gewebe bei Reibeinwirkungen von außen scheinbar dem reibenden Gegenstand ausweichen und das Gewebe erhält höhere Abriebeigenschaften.
Besonders glatte und (kreis-)runde Filamente, deren Einsatz bevorzugt ist, erleichtern das Ausweichen gegen den Abriebgegenstand noch weiter.
Dies zeigt auch beigefügte Gegenüberstellung, in dem ein Geflechtschlauch einem Band mit einem Polyamidgewebe gegenüber gestellt worden ist.
Die handelsüblichen Geflechtschläuche sind aus Monofilamenten hergestellt, weisen eine Flächendeckung von 60 bis 90 % auf und verwenden Polyester und Polyamid als Polymerrohstoff. Bei Verwendung von Polyamid wird eine hohe Abrieb- und Scherbeständigkeit beschrieben. Die leichte Verschiebbarkeit und Verformbarkeit der Flechtung ist für das Durchziehen der elektrischen Kabel notwendig. Durch die festen Monofilamente wird ein Abriebschutz erreicht, was den Geflechtschläuchen aber eine hohe Biegesteifigkeit verleiht.
Ein Gewebe gemäß Anspruch 1, hergestellt aus Polyamid-Multifilamentgarnen, zeigt eine nahezu vollständige Flächendeckung durch die Leinwandbindung, die eine Beschichtung mit Klebemasse ermöglicht. Die geringe Biegesteifigkeit ermöglicht den Einsatz als Klebeband und gewährleistet einen flexiblen Kabelsatz in der Endanwendung. Das beschriebene Polyamidgewebe erreicht vergleichbare Abriebeigenschaften wie ein Geflechtschlauch.

| | Biegesteifigkeit in N | Abrieb 5 mm Dorn, 7N, 0,45mm Draht Hübe | Abriebklasse nach LV312 | Flächengewicht g/m² |
|---|---|---|---|---|
| Geflechtschlauch | 2,072 | 19100 | F | 400 |
| PA-Gewebe | 0,046 | 18200 | F | 210 |

Zur Bestimmung der Biegesteifigkeit wird ein Muster der Größe 75 x 60 mm aus der Probe geschnitten und in einer drehbaren Halterung mit der Fläche 50 x 60 mm eingespannt. Der Halter wird gekippt, so dass der überstehende Teil der Probe mit einer Länge von 25 mm um 30° gebogen wird. Die von der Probe aufgebrachte Kraft im gebogenen Zustand wird von einem Kraftsensor erfasst. Die Kraft stellt dabei das Maß der Biegesteifigkeit dar.
Die Messung erfolgt mit einem kalibrierfähigen Messgerät der Firma Wolf Messtechnik Wie sich zeigt, wird eine mechanische Festigkeit gegen Abrieb von dem Band mit Gewebeträger erreicht, wie sie die bekannten Gewebeschläuche zeigen, ohne dass der Nachteil der erhöhten Steifigkeit in Kauf genommen werden muss.

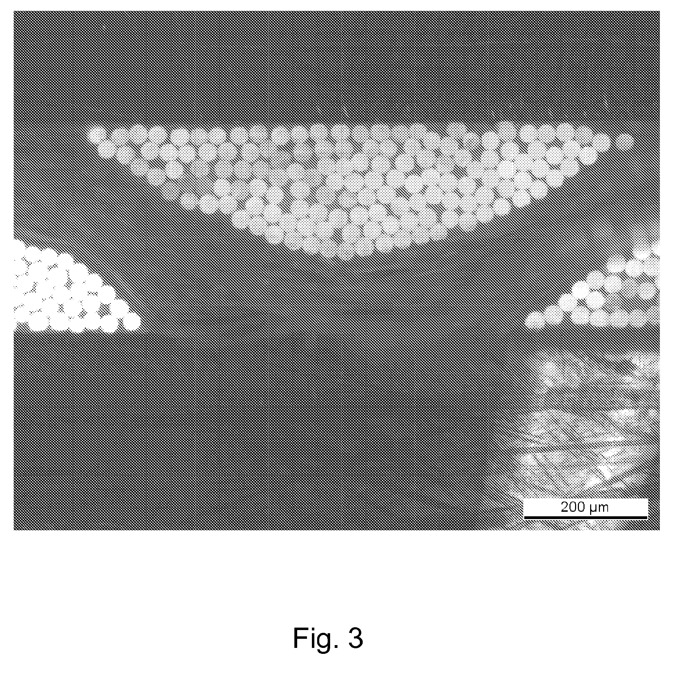

In der Figur 3 ist eine Photographie des erfindungsgemäßen Bandes im Querschnitt gezeigt. Die Photographie zeigt im oberen Bereich ein einzelnes Garn, das sich aus vielen einzelnen Filamenten zusammensetzt.
Aufgrund des kreisrunden Querschnitts der Filamente und der nahezu ideal glatten Außenhülle sind diese sehr beweglich, wenn äußerer mechanischer Druck ausgeübt wird.

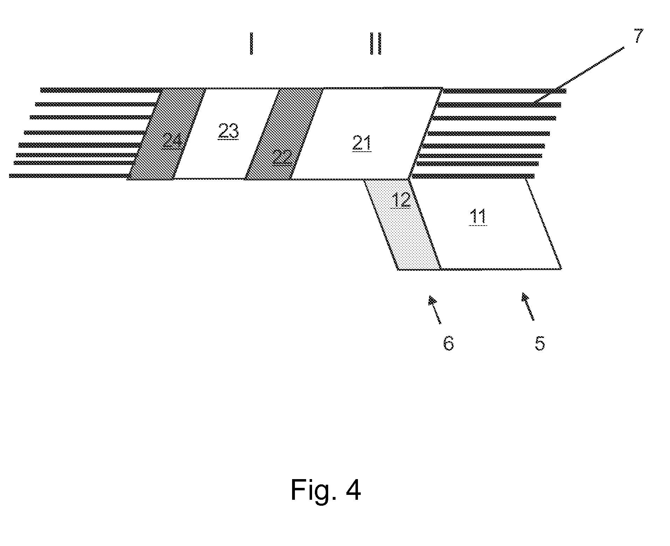

In der Figur 4 ist ein Ausschnitt eines Kabelbaums gezeigt, der sich aus einer Bündelung von einzelnen Kabeln 7 zusammensetzt und der mit dem erfindungsgemäßen Klebeband ummantelt ist. Das Klebeband wird in einer spiralförmigen Bewegung um den Kabelbaum geführt.
Der gezeigte Ausschnitt des Kabelbaums zeigt zwei Wicklungen I und II des Klebebands. Nach links hin würden sich weitere Wicklungen erstrecken, diese sind hier nicht dargestellt.
Auf der Klebebeschichtung 4 ist ein Streifen 5 der Eindeckung vorhanden, so dass sich ein in Längsrichtung des Bands erstreckender Klebestreifen 6 ergibt. Es wechseln sich nichtklebende Bereiche 11, 21, 23 des Klebebands mit klebenden Bereichen 12, 22, 24 ab. (Die Abschnitte 22, 24 sind im Gegensatz zur offen liegenden Klebemasse 12 von außen nicht sichtbar, weshalb die dichtere Schraffur zur Darstellung gewählt ist.)
Die Ummantelung des Kabelbaums erfolgt derartig, dass der Klebemassestreifen 6 vollständig auf dem Klebeband verklebt. Eine Verklebung mit den Kabeln 7 ist ausgeschlossen.
Aufgrund der hervorragenden Eignung des Bandes kann das Band in einer Ummantelung Verwendung finden, die aus einer Eindeckung besteht, bei der zumindest in einem Kantenbereich der Eindeckung ein selbstklebend ausgerüstetes Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.
Bevorzugt wird die Eindeckung von dem Gewebe des Bandes gebildet, in anderen Ausführungsformen wird das Gewebe als Träger in dem Klebeband beziehungsweise in den später erwähnten Klebebändern verwendet, oder sowohl Eindeckung als auch Träger des oder der Klebebänder bestehen aus dem Band.
Gemäß der bevorzugten Variante besteht zumindest die Eindeckung aus dem Band.

Die Breite der Eindeckung wird vorteilhafterweise so gewählt, dass sie mit dem Umfang der zu ummantelten Gutes weitgehend übereinstimmt, um möglichst keine doppelte Lage an Eindeckung über dem Gut zu erhalten. Das oder die Klebebänder haben bevorzugt Breiten zwischen 10 und 25 mm.
Wenn ein größerer Schutz des Gutes oder stärkere Dämpfungseigenschaften gewünscht werden, kann die Eindeckung eine sehr viel größere Breite aufweisen, als es dem Umfang des zu ummantelnden Gutes entspricht, um beispielsweise einen zwei- oder dreifachen Umschlag des Gutes zu erzielen.
In einer weiteren vorteilhaften Variante weist die Ummantelung im Kantenbereich der Eindeckung ein zweites selbstklebend ausgerüstetes Klebeband auf, das so auf der Eindeckung verklebt ist, dass sich das Klebeband über die andere der beiden Längskanten der Eindeckung erstreckt, und zwar vorzugsweise in einem im Vergleich zur Breite der Eindeckung schmalen Kantenbereich.
In einer weiteren vorteilhaften Variante sind die beiden Klebebänder auf der Oberseite der Eindeckung angeordnet.
Es hat sich auch als hervorragend geeignet herausgestellt, wenn das eine Klebeband auf der Oberseite der Eindeckung und das andere Klebeband auf der Unterseite der Eindeckung angeordnet sind.

Die Ummantelung ist wiederum vorteilhaft zum Ummanteln von langgestrecktem Gut, wie insbesondere Kabelsätzen, zu verwenden, wobei das langgestreckte Gut in axialer Richtung von der Eindeckung umhüllt wird. Die Umhüllung des Gutes mit der Eindeckung erfolgt so, dass das selbstklebend ausgerüstete Klebeband im Wesentlichen auf der Eindeckung selbst verklebt.

In einer weiteren vorteilhaften Variante ist das einseitig selbstklebend ausgerüstete Klebeband so auf der Eindeckung verklebt, dass bezogen auf die Mittelachse des Gutes die Klebemasse innenwärts liegt.
In einer weiteren vorteilhaften Variante ist das einseitig selbstklebend ausgerüstete Klebeband so auf der Eindeckung verklebt ist, dass bezogen auf die Mittelachse des Gutes die Klebemasse außenwärts liegt.
Weiterhin hat es sich als vorteilhaft herausgestellt, wenn das einseitig selbstklebend ausgerüstete Klebeband so auf dem ersten Kantenbereich der Eindeckung verklebt ist, dass bezogen auf die Mittelachse des Gutes die Klebemasse innenwärts liegt, und wenn ein zweites selbstklebend ausgerüstetes Klebeband so auf dem zweiten Kantenbereich der Eindeckung verklebt ist, dass bezogen auf die Mittelachse des Gutes die Klebemasse außenwärts liegt, wobei die Umhüllung des Gutes so erfolgt, dass die beiden Klebebänder jeweils auf der Eindeckung verkleben.
Ebenfalls für den Fachmann unerwartet ergeben sich viele Vorzüge, wenn das einseitig selbstklebend ausgerüstete Klebeband so auf dem ersten Kantenbereich der Eindeckung verklebt ist, dass bezogen auf die Mittelachse des Gutes die Klebemasse innenwärts liegt, und wenn ein zweites selbstklebend ausgerüstetes Klebeband so auf dem zweiten Kantenbereich der Eindeckung verklebt ist, dass bezogen auf die Mittelachse des Gutes die Klebemasse innenwärts liegt, wobei die Umhüllung des Gutes so erfolgt, dass das erste Klebeband auch auf dem Gut und das zweite Klebeband im wesentlichen auf der Eindeckung verklebt.
Das erste Klebeband, das zur leichten Fixierung der Ummantelung auf dem Gut dient, kann eine schmalere Breite aufweisen als das zweite Klebeband, das die Ummantelung auf der Eindeckung verklebt.
Ebenso mit überraschenden Vorteilen behaftet ergibt sich eine weitere Form eines derartigen Umhüllungsbandes, bei dem das erste Klebeband beidseitig selbstklebend ist und somit aktive Verklebungsflächen sowohl innen- als auch außenwärts gerichtet aufweist. Das zweite Klebeband, auch dieses kann ein beidseitig klebend ausgerüstetes Klebeband sein, ist so auf dem zweiten Kantenbereich der Eindeckung positioniert, dass bezogen auf die Mittelachse des Gutes die Klebemasse innenwärts liegt.

Die Umhüllung des Gut erfolgt so, dass die eine Seite des doppelseitig selbstklebenden Klebebandes eine Fixierung des Umhüllungsbandes auf dem Gut ermöglicht, während die zweite Seite des doppelseitig selbstklebenden Klebebandes sowie das zweite Klebeband für die Verklebung auf der Eindeckung oder Klebemasse auf Klebemasse zur Verfügung stehen.

Die Umhüllung des Gutes kann für die einseitig mit Klebeband ausgerüstete Ausführungsform so erfolgen, dass die Klebemasse des Klebebands
- nur auf der Eindeckung verklebt wird,
- jeweils zu einem Teil auf der Eindeckung und zu einem Teil auf dem Gut verklebt wird oder
- jeweils zu einem Teil auf der Eindeckung verklebt wird und zu einem Teil zunächst offen gelassen wird, um später eine Fixierung, zum Beispiel an Karosserieblechen, zu erreichen.

Die Umhüllung des Guts kann für die beidseitig mit jeweils einseitig selbstklebendem Klebeband ausgerüstete Ausführungsform so erfolgen, dass die Klebemassen der beiden Klebebänder
- jeweils zu einem Teil auf der Eindeckung verkleben und zu einem Teil auf sich selbst verkleben
- nur auf der Eindeckung verkleben.

Die Umhüllung des Guts kann für die beidkantig mit Klebeband ausgerüstete Ausführungsform, wobei zumindest ein Klebeband eine beidseitige selbstklebende Beschichtung aufweist, so erfolgen, dass die Klebemassen, die nicht zur Verklebung direkt auf dem Gut verwendet werden,
- jeweils nur auf der Eindeckung verkleben
- jeweils zum einen Teil auf der Eindeckung verkleben und zum anderen Teil auf sich selbst verkleben.

Vorzugsweise erfolgt die Verklebung des oder der Klebebänder derart, dass eine 50 %ige Überlappung des Klebebands mit der Eindeckung vorhanden ist.

Als Eindeckung können ansonsten alle bekannten textilen Träger wie eine Schlingenware, ein Velour, ein Gelege, ein Gewebe, ein Gewirke, insbesondere ein PET-Filamentgewebe oder ein PolyamidGewebe verwendet werden, wobei unter "Vlies" zumindest textile Flächengebilde gemäß EN 29092 (1988) sowie Nähwirkvliese und ähnliche Systeme zu verstehen sind. Dabei müssen Eindeckung und Trägermaterial nicht zwangsläufig aus den gleichen Materialien bestehen.
Ebenfalls können Abstandsgewebe und -gewirke mit Kaschierung verwendet werden. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Die durch die Partikelschicht hindurchgenadelten Haltefasern halten die Deckschicht und die Unterlagsschicht in einem Abstand voneinander und sie sind mit der Deckschicht und der Unterlagsschicht verbunden.
Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird. Besonders vorteilhaft haben sich Vliese erwiesen, die insbesondere durch ein Übernähen mit separaten Fäden oder durch ein Vermaschen verfestigt sind.
Derartige verfestigte Vliese werden beispielsweise auf Nähwirkmaschinen des Typs "Malivlies" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird. Als Eindeckung kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.
Schließlich sind auch Nähvliese geeignet. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.
Sodann ist das Caliweb® hervorragend geeignet. Das Caliweb® besteht aus einem thermisch fixierten Abstandsvliesstoff Multiknit mit zwei außenliegenden Maschenschichten und einer innenliegenden Polschicht, die senkrecht zu den Maschenschichten angeordnet sind.
Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.
Die Verfestigung des Vliesträgers lässt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.
Als Ausgangsmaterialien für die textilen Materialien sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung eingesetzt werden. Insbesondere verschleißfeste Polymere wie Polyester, Polyolefine, Polyamide oder Glas- oder Carbonfasern Verwendung.
Als Material eignen sich auch Laminate aus Folien oder aus bahnförmigen Schaumstoffen (beispielsweise aus Polyethylen und Polyurethan).
Zur Ummantelung des langgestreckten Gutes eignet sich auch eine Eindeckung, die aus Papier, aus einem Laminat, aus einer Folie (zum Beispiel basierend auf Polyolefinen (zum Beispiel Polyethylen-, Polypropylen-, mono- oder biaxial orientierte Polypropylenfolien, Polyester-, PA-, und andere Folien) oder PVC), aus Schaumstoff oder aus einer geschäumten Folie besteht.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel u.ä. in den eigentlichen Kabelbereich und lassen sich über geeignete Auswahl des Werkstoffes den Anforderungen weitgehend anpassen: mit Polyurethanen, Copolymeren aus Polyolefinen lassen sich beispielsweise flexible und elastische Ummantelungen erzeugen, mit Polyester und Polyamiden werden gute Abrieb- und Temperaturbeständigkeiten erreicht.
Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Für den Einsatz bei Kabelbäumen, die im Automobilbau Verwendung finden, sind für die Eindeckung Breiten von 80, 105, 135 mm besonders vorteilhaft, können aber je nach Anwendungsfall variabel hergestellt werden; die Länge richtet sich nach der Ausgestaltung des Kabelbaums.
Das Gesamtprodukt aus Klebeband und Eindeckung, also sämtliche Ausführungsformen der Ummantelung, kann in festen Längen wie zum Beispiel als Meterware oder aber als Endlosware auf Rollen (archimedische Spirale) zur Verfügung gestellt werden. Für die Verwendung ist im letzteren Fall dann ein variables Ablängen durch Messer, Scheren oder Dispenser u.ä. möglich oder aber bei geeigneter Wahl der Materialien für die Eindeckung sowie die Klebebänder eine manuelle Verarbeitbarkeit ohne Hilfsmittel.
Zur Verklebung kommen insbesondere Streifen des Klebebands zum Einsatz, die eine Breite von 15 bis 50 mm aufweisen.
Wie oben bereits beim Klebeband ausführlich beschrieben, kann auch die Ummantelung perforiert sein.
Durch die Ummantelung des bevorzugten Kabelbaums ist dieser hervorragend geschützt und gegen Erschütterungen gedämpft. Die textile Eindeckung ist leicht, so dass der Kabelbaum nicht sehr an Gewicht zulegt, und dehnfähig, so dass der Kabelbaum insgesamt verformbar ist. Er kann somit in schwierigen Lagen den zur Verfügung stehenden Platzverhältnissen hervorragend angepasst werden.
Durch seinen ursprünglich runden oder ovalen Querschnitt erleichtert der erfindungsgemäße Kabelbaum die störungsfreie Durchführung durch Bohrungen, Löcher, Öffnungen und dergleichen, ermöglicht anschließend eine leichte Verformbarkeit in andere Geometrien und Querschnitte, um sich so den örtlichen Gegebenheiten möglichst ideal anzupassen. So ist selbst ein nahezu flaches Profil für die Verlegeaufgaben zum Beispiel in der Bodengruppe unter dem Teppich möglich, ohne die unterschiedlichen Querschnitte bereits bei der Kabelbaumfertigung einarbeiten zu müssen.
Als vorteilhaft erweist sich auch, dass in dem Bereich der Ansatzverklebung bis zu drei Lagen Träger übereinander liegen können; werden besonders hohe Ansprüche an die Dämpfungseigenschaften oder die Abriebfestigkeit gestellt, die sich auf Teilbereiche des Querschnitts beschränken, kann die Überlappungsstelle entsprechend den Anforderungen positioniert werden; die Fläche der Mehrlagigkeit kann leicht durch die Auswahl der Klebebandbreite sowie über die Verklebungstechnik gesteuert werden.

Schließlich verhindert die erfindungsgemäße Art des Einwickelns Faltenwurf.

Die beschriebene Lösung hat weiterhin die Vorteile, dass es sich um einen sauberen, fähnchenfreien Kabelbaum handelt, welcher einen guten Oberflächenschutz bietet, hohe Bündelungskraft, gute Geräuschdämpfung und bei dicken Kabelsätzen eine sehr hohe Verformbarkeit in Querschnittsrichtung gewährleistet.

Im Folgenden soll die Ummantelung anhand mehrerer Figuren näher erläutert werden, ohne damit eine wie auch immer geartete Einschränkung hervorrufen zu wollen.

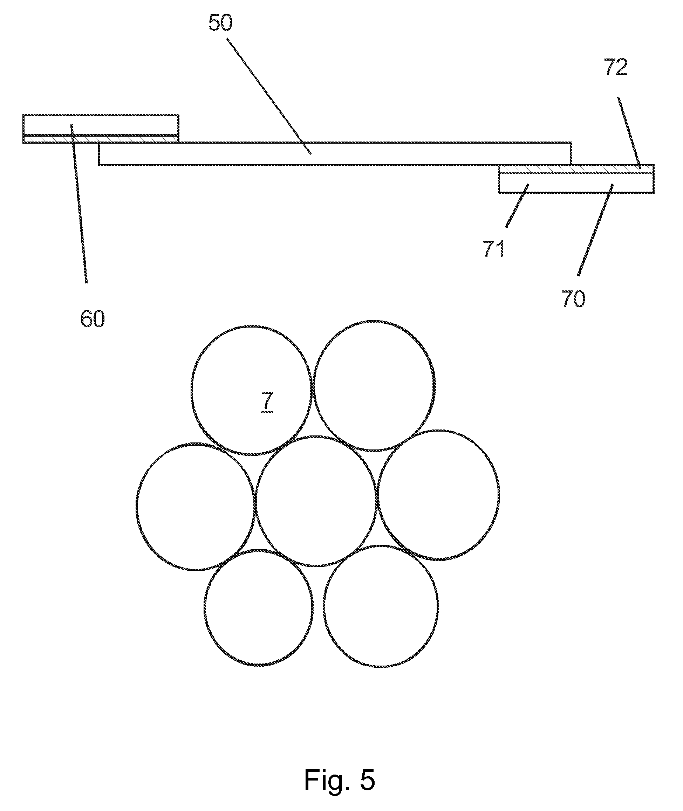

Es zeigen
- Figur 5: eine Ummantelung, bestehend aus einer mit zwei Klebebandabschnitten ausgerüsteten Eindeckung,

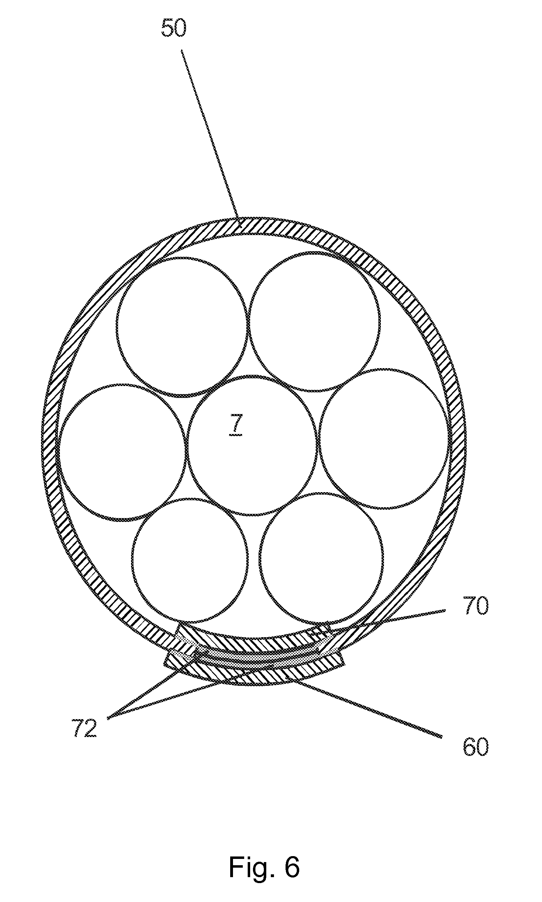

- Figur 6: einen Kabelbaum, der ummantelt ist,

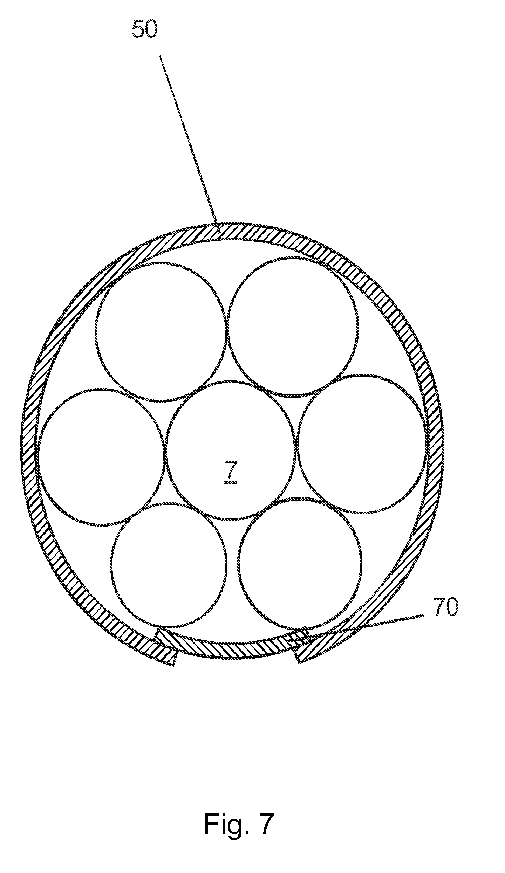

- Figur 7: eine mit einem Klebebandabschnitt ausgerüstete Eindeckung mit der Klebemasse nach außen weisend,

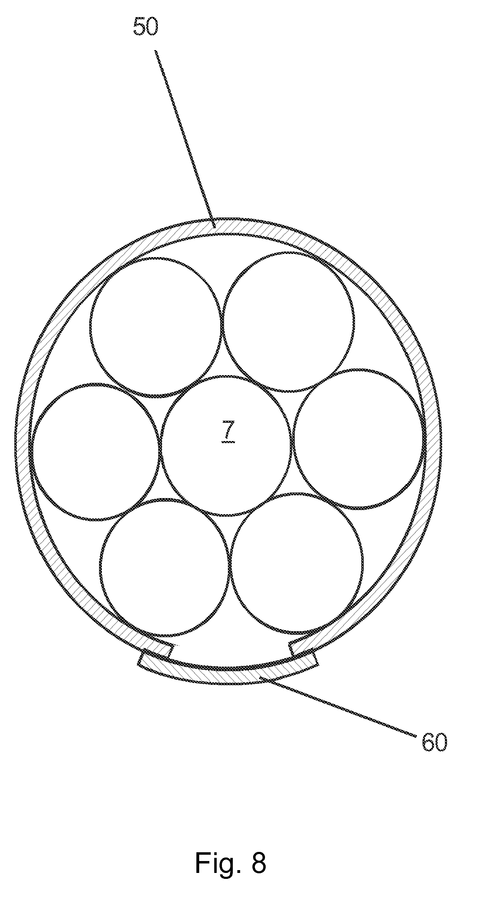

- Figur 8: eine mit einem Klebebandabschnitt ausgerüstete Eindeckung mit der Klebemasse nach innen weisend,

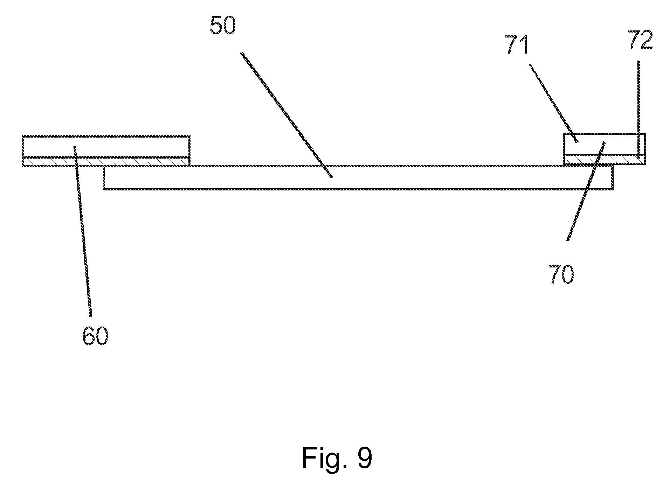

- Figur 9: eine zweite Ummantelung, bestehend aus einer mit zwei Klebebandabschnitten ausgerüsteten Eindeckung,

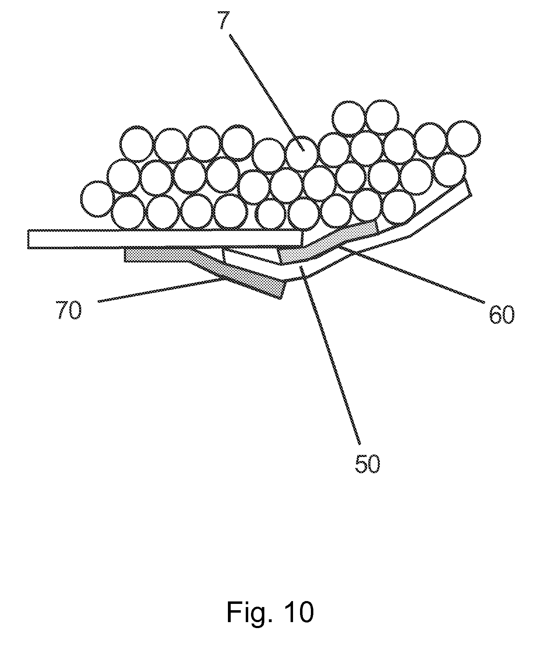

- Figur 10: das mit Ummantelung aus Figur 9 ummantelte Gut und

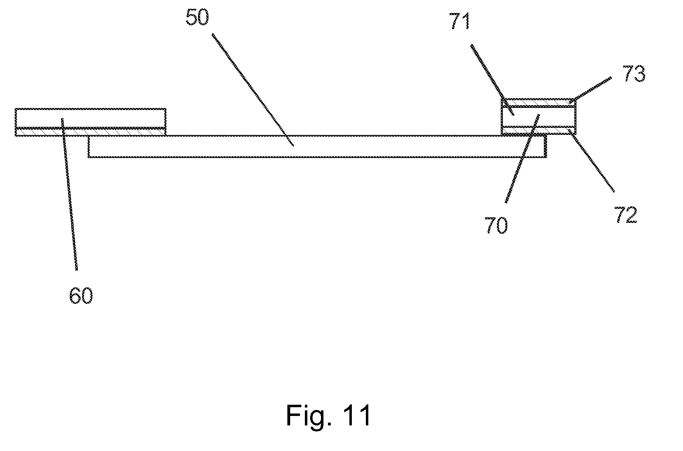

- Figur 11: eine weitere Ummantelung, bestehend aus einer mit zwei Klebebandabschnitten ausgerüsteten Eindeckung, wobei ein Klebebandabschnitt zweiseitig klebend ausgerüstet ist.

In der Figur 5 ist im Querschnitt eine Ummantelung mit einer textilen Eindeckung 50 gezeigt, die zur Ummantelung von langgestrecktem Gut, insbesondere Kabelsätzen, eingesetzt werden kann.
Ein einseitig selbstklebend ausgerüstetes Klebeband 60 ist so in axialer Richtung des Gutes auf zumindest einem im Vergleich zur Breite der Eindeckung 50 schmalen Kantenbereich der Eindeckung 50 verklebt, dass bezogen auf die Mittelachse des zu ummantelnden Gutes (Kabelbaum 7) die Klebemasse innenwärts liegt. Auf dem zweiten Kantenbereich der Eindeckung 50 ist ein zweites selbstklebend ausgerüstetes Klebeband 70 so verklebt, dass bezogen auf die Mittelachse des Gutes die Klebemasse 72 außenwärts liegt. Das Klebeband 70 besteht im Wesentlichen aus dem bevorzugt textilen Träger 71 und der Klebemasse 72.

In der Figur 6 ist ein umhüllter Kabelbaum 7 gezeigt, der sich aus einzelnen Kabeln zusammensetzt, in diesem Fall sieben. Die Ummantelung des Kabelbaums 7 erfolgt so, dass die Klebemassen 72 der beiden Klebebänder 60,70 jeweils auf der Eindeckung 50 und zu einem Teil auf sich selbst verkleben, in dem dargestellten Fall beträgt die Verklebung des Klebebandes auf der Eindeckung weniger als 50 %.

Durch Weglassen des Klebebands 60, wie es in Figur 7 dargestellt ist, besteht als weitere Ausführungsform durch einen nach außen orientierten Klebestreifen die Möglichkeit, den längsummantelten Kabelbaum an Umgebungsflächen zu fixieren, zum Beispiel an Karosserieblechen, um so ein Verrutschen, Klappern oder ähnliches zu verhindern.

In einer weiteren gesonderten Ausprägungsform kann durch Weglassen des Klebebandes 70 (siehe Figur 8) - das heißt, nur eine Kante der Eindeckung ist mit einem Klebeband versehen - ein nach innen zu dem Kabelbaum gerichteter, schmaler klebender Bereich des Klebebandes erhalten bleiben, der an einem oder mehreren Einzelkabeln des Kabelbaumes festklebt und somit die Konfiguration fixiert. Ein Verrutschen der Ummantelung wird somit weitgehend verhindert.

In den Figuren 7 und 8 ist die auf dem Trägermaterial befindliche Klebemasseschicht nicht so deutlich dargestellt wie in Figur 6.

In der Figur 9 ist im Querschnitt eine zweite Ummantelung mit einer textilen Eindeckung 50 gezeigt, die zur Ummantelung von langgestrecktem Gut, insbesondere Kabelsätzen, eingesetzt werden kann.
Ein einseitig selbstklebend ausgerüstetes Klebeband 60 ist so in axialer Richtung des Gutes auf zumindest einem im Vergleich zur Breite der Eindeckung 50 schmalen Kantenbereich der Eindeckung 50 verklebt, dass bezogen auf die Mittelachse des zu ummantelnden Gutes (Kabelbaum 7) die Klebemasse innenwärts liegt. Auf dem zweiten Kantenbereich der Eindeckung 50 ist ein zweites selbstklebend ausgerüstetes Klebeband 70 so verklebt, dass bezogen auf die Mittelachse des Gutes die Klebemasse 72 ebenfalls innenwärts liegt.

In der Figur 10 ist das mit Ummantelung aus Figur 5 ummantelte Gut 7 gezeigt, und zwar im besonderen der Bereich, der die Umhüllung in ihrer Lage fixiert.
Das erste Klebeband 60 dient während des Vorgangs der Ummantelung dazu, die Eindeckung 50 beziehungsweise die gesamte Ummantelung leicht auf dem Gut 7 festzulegen, so dass ein Verrutschen der Ummantelung nicht auftritt. Das erste Klebeband 60 weist eine schmalere Breite auf als das zweite Klebeband 70, das die Eindeckung 50 und somit die gesamte Ummantelung um das Gut 7 fixiert.

In der Figur 11 ist im Querschnitt eine weitere Ummantelung mit einer textilen Eindeckung 50 gezeigt, die zur Ummantelung von langgestrecktem Gut, insbesondere Kabelsätzen, eingesetzt werden kann.
Die Ummantelung entspricht im wesentlichen der aus Figur 9, lediglich ist auf dem zweiten Kantenbereich der Eindeckung 50 ist ein zweites selbstklebend ausgerüstetes Klebeband 70 vorhanden, das ein beidseitig selbstklebend ausgerüstetes ist, also zwei Kleberschichtungen 72, 73 aufweist.
Ansonsten besteht das Klebeband 70 im Wesentlichen aus dem bevorzugt textilen Träger 71.

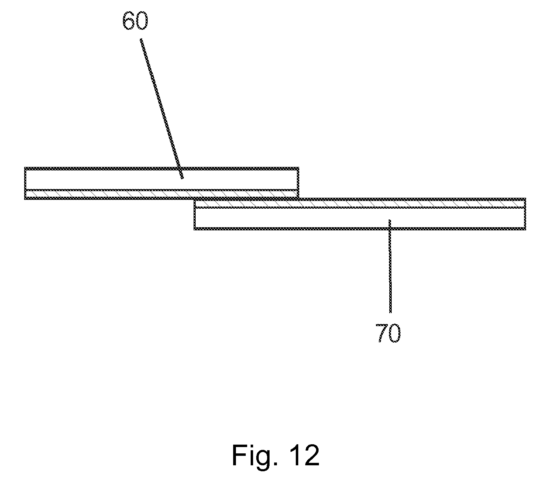

In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 12 dargestellt ist
Auch diese Ausführungsform findet Anwendung, wie es oben bei der Ummantelung beschrieben ist.
Schließlich ist vom Erfindungsgedanken auch ein langgestrecktes Gut wie insbesondere ein Kabelsatz umfasst, ummantelt mit dem erfindungsgemäßen Band oder den beschriebenen Ummantelungen umfassend das erfindungsgemäße Band sowie ein Fahrzeug, enthaltend einen erfindungsgemäß ummantelten Kabelbaum.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Im Folgenden soll die Erfindung anhand mehrerer Beispiele näher erläutert werden, ohne mit diesen die Erfindung in irgendeiner Weise beschränken zu wollen.

### Beispiele

### Beispiel 1 (erfindungsgemäß)

Die Verwebung von Garnen aus Polyamid 66 der Firma INVISTA mit einer Garnfeinheit von 1100 dtex und einer Filamentanzahl von 140 pro Garn in Leinwandbindung mit der Konstruktion (Kette 13 Fäden/cm und Schuss 12 Fäden/cm) führt zu einem Flächengewicht von 280 g/m². Das erhaltene Gewebe zeigt eine Höchstzugkraft von 680 N/cm bei einer Reißdehnung von 36 % und weist eine Biegesteifigkeit von 0,044 N auf. Die Beschichtung mit einer Acrylat-Klebemasse von 120 g/m² führt zu einem Klebeband, dass an einem 5- und 10-mm-Dorn eine Abriebklasse **F** nach LV312 aufweist.

| | |
|---|---|
| ISO 6722 Abrieb 7N / 5-mm-Dorn | 18800 Hübe |
| ISO 6722 Abrieb 7N / 10-mm-Dorn | 31200 Hübe |

### Beispiel 2 (erfindungsgemäß)

Garne aus Polyamid 66 der Garnfeinheit 470 dtex mit einer Filamentanzahl von 144 pro Garn in Leinwandbindung mit der Konstruktion (Kette 20 Fäden/cm und Schuss 20 Fäden/cm) führen zu einem Flächengewicht von 210 g/m². Das erzeugte Gewebe zeigt eine Biegesteifigkeit von 0,046 N, eine Höchstzugkraft von 650 N/cm und eine Reißdehnung von 47 %. Die Beschichtung mit einer Acrylat-Klebemasse von 100 g/m² führt zu einem Klebeband, dass an einem 5- und 10-mm-Dorn eine Abriebklasse **F** nach LV312 aufweist.

| | |
|---|---|
| ISO 6722 Abrieb 7N / 5-mm-Dorn | 18200 Hübe |
| ISO 6722 Abrieb 7N / 10-mm-Dorn | 28000 Hübe |

### Beispiel 3 (erfindungsgemäß)

Die Webung von Garnen aus Polyamid 6 der Garnfeinheit 470 dtex mit einer Filamentzahl von 136 pro Garn in Leinwandbindung mit der Konstruktion (Kette 21 Fäden/cm und Schuss 15 Fäden/cm) führen zu einem Flächengewicht von 190 g/m². Das Gewebe zeigt eine Biegesteifigkeit von 0,029 N. Die Beschichtung mit einer Acrylat-Klebemasse von 100 g/m² führt zu einem Klebeband, dass an einem 5- und 10-mm-Dorn eine Abriebklasse **E** nach LV312 aufweist.

| | |
|---|---|
| ISO 6722 Abrieb 7N / 5-mm-Dorn | 6600 Hübe |
| ISO 6722 Abrieb 7N / 10-mm-Dorn | 12100 Hübe |

### Beispiel 4 (Vergleichsbeispiel)

Der Vergleich mit dem erfindungsgemäßen Beispiel 2 zeigt eine deutlich geringere Abriebfestigkeit bei reduzierter Filamentanzahl im Garn. Die Verwebung von Garnen aus Polyamid 66 der Garnfeinheit 470 dtex mit einer Filamentzahl von 68 pro Garn in Leinwandbindung mit der Konstruktion (Kette 20 Fäden/cm und Schuss 14 Fäden/cm) führen zu einem Flächengewicht von 185 g/m². Das Gewebe zeigt eine Biegesteifigkeit von 0,021 N. Die Beschichtung mit einer Acrylat-Klebemasse von 100 g/m² führt zu einem Klebeband, dass an einem 5-mm-Dorn eine Abriebklasse **D** nach LV312 und 10-mm-Dorn eine Abriebklasse **E** nach LV312 aufweist.

| | |
|---|---|
| ISO 6722 Abrieb 7N / 5-mm-Dorn | 3700 Hübe |
| ISO 6722 Abrieb 7N / 10-mm-Dorn | 5900 Hübe |

### Beispiel 5 (Vergleichsbeispiel)

Der Vergleich mit dem erfindungsgemäßen Beispiel 2 zeigt eine deutlich geringere Abriebfestigkeit bei Verwendung von Polyester als Garnkunststoff. Die Verwebung von Garnen aus Polyester der Garnfeinheit 370 dtex mit einer Filamentzahl von 102 pro Garn in Leinwandbindung mit der Konstruktion (Kette 27 Fäden/cm und Schuss 22 Fäden/cm) führen zu einem Flächengewicht von 180 g/m². Das Gewebe zeigt eine Biegesteifigkeit von 0,029 N. Die Beschichtung mit einer Acrylat-Klebemasse von 100 g/m² führt zu einem Klebeband, dass an einem 5- und 10-mm-Dorn eine Abriebklasse **D** nach LV312 aufweist.

| | |
|---|---|
| ISO 6722 Abrieb 7N / 5-mm-Dorn | 1300 Hübe |
| ISO 6722 Abrieb 7N / 10-mm-Dorn | 2200 Hübe |

## Patentansprüche

1. Hoch abriebfestes Band, vorzugsweise zum Umhüllen von langgestrecktem Gut wie insbesondere Leitungen oder Kabelsätze, mit einem Gewebe als Träger,
auf den zumindest einseitig eine Klebebeschichtung aufgebracht ist,
**dadurch gekennzeichnet, dass**
das Gewebe aus Polyamid besteht, die zur Bildung des Gewebes verwendeten Garne eine Stärke von 280 bis 1100 dtex aufweisen und jedes Garn aus mindestens 90 Einzelfilamenten aufgebaut ist.

2. Band nach Anspruch 1,
**dadurch gekennzeichnet, dass**
die verwendeten Garne aus 90 bis 288 Einzelfilamenten, vorzugsweise 100 bis 150 Einzelfilamenten, besonders vorzugsweise 130 bis 145 Einzelfilamenten aufgebaut sind.

3. Band nach einem der Ansprüche 1 oder 2,
**dadurch gekennzeichnet, dass**
die Anzahl der Kettfäden im Gewebeträger im Bereich 12 bis 45 je cm, vorzugsweise 15 bis 25 je cm liegt

4. Band nach zumindest einem der Ansprüche 1 bis 3,
**dadurch gekennzeichnet, dass**
die Anzahl der Schussfäden im Gewebeträger im Bereich 10 bis 35 je cm, vorzugsweise 15 bis 25 je cm liegt.

5. Band nach zumindest einem der vorherigen Ansprüche,
**dadurch gekennzeichnet, dass**
der Gewebeträger ein Flächengewicht von 130 bis 300 g/m², vorzugsweise 180 bis 220 g/m² aufweist.

6. Band nach zumindest einem der vorherigen Ansprüche,
**dadurch gekennzeichnet, dass**
als Polymere für den Kunststoff des Gewebes PA6, PA66 oder PA66 hitzestabilisiert, Verwendung finden, vorzugsweise Polyamid 66.

7. Band nach zumindest einem der vorherigen Ansprüche,
**dadurch gekennzeichnet, dass**
die Klebebeschichtung eine selbstklebende Klebebeschichtung ist, vorzugsweise auf Basis von Kautschuk, Acrylat oder Silikon, besonders bevorzugt auf Basis von Acrylat.

8. Verwendung eines Bands nach zumindest einem der vorherigen Ansprüche zum Ummanteln von langgestrecktem Gut, wie insbesondere Kabelsätzen, wobei das langgestreckte Gut in axialer Richtung von dem Band umhüllt wird oder das Band in einer schraubenförmigen Spirale um das langgestreckte Gut geführt wird.

9. Verwendung eines Bands nach zumindest einem der vorherigen Ansprüche in einer Ummantelung, die aus einer Eindeckung besteht, bei der auf zumindest einem Kantenbereich der Eindeckung ein selbstklebend ausgerüstetes Klebeband vorhanden ist, das so auf der Eindeckung verklebt ist, dass sich das Klebeband über eine der Längskanten der Eindeckung erstreckt, wobei die Eindeckung oder der Träger des Klebebands oder Eindeckung und Träger des Klebebands von dem Band gebildet werden.

10. Verwendung eines Bands nach zumindest einem der vorherigen Ansprüche in einer Ummantelung bei der zwei mit einer Klebemasse ausgerüstete erfindungsgemäße Bänder mit ihren Klebemassen bevorzugt um jeweils 50 % versetzt aufeinander laminiert werden.

11. Langgestrecktes Gut, wie insbesondere ein Kabelsatz, ummantelt mit einem Band oder einer Ummantelung nach zumindest einem der vorherigen Ansprüche.

12. Fahrzeug, enthaltend Kabelbaum nach Anspruch 11.

## Claims

1. Highly abrasion-resistant tape, preferably for sheathing elongate material such as, more particularly, leads or cable looms, having a woven fabric backing to which an adhesive coating is applied on at least one side,
**characterized in that**
the fabric is composed of nylon, the yarns used to form the fabric have a linear density of 280 to 1100 dtex, and each yarn is constructed from at least 90 single filaments.

2. Tape according to Claim 1, **characterized in that** the yarns used are constructed from 90 to 288 single filaments, preferably 100 to 150 single filaments, more preferably 130 to 145 single filaments.

3. Tape according to either of Claims 1 and 2, **characterized in that** the number of warp threads in the woven fabric backing is in the 12 to 45 per cm range, preferably 15 to 25 per cm.

4. Tape according to at least one of Claims 1 to 3, **characterized in that** the number of weft threads in the woven fabric backing is in the 10 to 35 per cm range, preferably 15 to 25 per cm.

5. Tape according to at least one of the preceding claims, **characterized in that** the woven fabric backing has a basis weight of 130 to 300 g/m², preferably 180 to 220 g/m².

6. Tape according to at least one of the preceding claims, **characterized in that** polymers used for the plastics material of the woven fabric are nylon 6, nylon 6,6 or nylon 6,6 heat-stabilized, preferably nylon 6,6.

7. Tape according to at least one of the preceding claims, **characterized in that** the adhesive coating is a self-adhesive coating, preferably based on rubber, acrylate or silicone, more preferably based on acrylate.

8. Use of a tape according to at least one of the preceding claims for wrapping elongate material, such as cable looms in particular, the elongate material being sheathed in the axial direction by the tape, or the tape being led in a helicoidal spiral around the elongate material.

9. Use of a tape according to at least one of the preceding claims in a wrapping composed of a jacket, a self-adhesive tape being present on at least one edge region of the jacket, and being bonded to the jacket in such a way that the adhesive tape extends over one of the long edges of the jacket, the jacket or the backing of the adhesive tape, or jacket and backing of the adhesive tape, being formed by the tape.

10. Use of a tape according to at least one of the preceding claims in a wrapping, where two tapes of the invention, furnished with an adhesive, are laminated by their adhesives to one another preferably with an offset each of 50%.

11. Elongate material, such as more particularly a cable loom, wrapped with a tape or a wrapping according to at least one of the preceding claims.

12. Vehicle comprising cable harness according to Claim 11.

## Revendications

1. Bande hautement résistante à l'usure, de préférence pour le bandage de produits allongés tels que notamment des conduites ou des faisceaux de câbles, avec un tissu en guise de support, sur lequel un revêtement adhésif est déposé au moins sur une face, **caractérisée en ce que** le tissu se compose de polyamide, les fils utilisés pour la formation du tissu présentent une épaisseur de 280 à 1100 dtex et chaque fil est constitué d'au moins 90 filaments individuels.

2. Bande selon la revendication 1, **caractérisée en ce que** les fils utilisés sont constitués de 90 à 288 filaments individuels, de préférence de 100 à 150 filaments individuels, et de préférence encore de 130 à 145 filaments individuels.

3. Bande selon l'une des revendications 1 ou 2, **caractérisée en ce que** le nombre des fils de chaîne dans le support de tissu se situe dans la plage de 12 à 45 par cm, de préférence de 15 à 25 par cm.

4. Bande selon au moins une des revendications 1 à 3, **caractérisée en ce que** le nombre des fils de trame dans le support de tissu se situe dans la plage de 10 à 35 par cm, de préférence de 15 à 25 par cm.

5. Bande selon au moins une des revendications précédentes, **caractérisée en ce que** le support de tissu présente un grammage de 130 à 300 g/m², de préférence de 180 à 220 g/m².

6. Bande selon au moins une des revendications précédentes, **caractérisée en ce que** l'on utilise comme polymères pour la matière plastique du tissu, du PA6, PA66 ou PA66 stabilisé à chaud, en particulier du polyamide 66.

7. Bande selon au moins une des revendications précédentes, **caractérisée en ce que** le revêtement adhésif est un revêtement adhésif autocollant, de préférence à base de caoutchouc, d'acrylate ou de silicone, de préférence encore à base d'acrylate.

8. Utilisation d'une bande selon au moins une des revendications précédentes pour le bandage de produits allongés, tels que notamment des faisceaux de câbles, dans laquelle le produit allongé est enveloppé en direction axiale par la bande ou la bande est conduite sous forme de spirale hélicoïdale autour du produit allongé.

9. Utilisation d'une bande selon au moins une des revendications précédentes dans un bandage, qui se compose d'un recouvrement, dans laquelle il se trouve sur au moins une région de bord du recouvrement une bande adhésive à revêtement autocollant, qui est collée sur le recouvrement de telle manière que la bande adhésive s'étende sur un des bords longitudinaux du recouvrement, dans laquelle le recouvrement ou le support de la bande adhésive ou le recouvrement et le support de la bande adhésive sont formés par la bande.

10. Utilisation d'une bande selon au moins une des revendications précédentes dans un bandage dans lequel deux bandes selon l'invention munies d'une masse adhésive sont laminées l'une sur l'autre avec leurs masses adhésives avec un décalage de préférence chaque fois de 50%.

11. Produit allongé, tel que notamment un faisceau de câbles, enveloppé avec une bande ou un bandage selon au moins une des revendications précédentes.

12. Véhicule, comportant un faisceau de câbles selon la revendication 11.
